(19) Europäisches Patentamt
European Patent Office
Office européen des brevets

(11) **EP 4 001 601 B1**

(12) **EUROPÄISCHE PATENTSCHRIFT**

(45) Veröffentlichungstag und Bekanntmachung des Hinweises auf die Patenterteilung:
**03.04.2024   Patentblatt 2024/14**

(21) Anmeldenummer: **20207687.3**

(22) Anmeldetag: **16.11.2020**

(51) Internationale Patentklassifikation (IPC):
**F01N 3/021** *(2006.01)*        **F01N 9/00** *(2006.01)*

(52) Gemeinsame Patentklassifikation (CPC):
**F01N 3/021; F01N 9/002; F01N 9/005;**
F01N 2900/04; F01N 2900/0601; F01N 2900/08;
F01N 2900/14; F01N 2900/1606; Y02T 10/12;
Y02T 10/40

(54) **VERFAHREN ZUR BESTIMMUNG EINER RUSSMASSE ZUM BELADEN UND/ODER EINER RUSSMASSE FÜR EINE REGENERATION EINES PARTIKELFILTERS MITHILFE MASCHINELLER LERNVERFAHREN**

METHOD FOR DETERMINING A SOOT MASS TO BE CHARGED AND / OR A SOOT MASS FOR REGENERATION OF A PARTICLE FILTER BY MEANS OF MACHINE LEARNING

PROCÉDÉ DE DÉTERMINATION D'UNE MASSE DE SUIE À CHARGER ET/OU D'UNE MASSE DE SUIE POUR RÉGÉNÉRER UN FILTRE À PARTICULES À L'AIDE D'UN PROCÉDÉ D'APPRENTISSAGE AUTOMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.05.2022   Patentblatt 2022/21**

(73) Patentinhaber: **Robert Bosch GmbH**
**70442 Stuttgart (DE)**

(72) Erfinder:
• **Baumann, Thomas**
**70806 Kornwestheim (DE)**

• **Wagner, Alexandre**
**70439 Stuttgart (DE)**
• **Straub, Fabian**
**70376 Deutschland (DE)**
• **Pachomow, Evgenij**
**71672 Marbach Am Neckar (DE)**
• **Alt, Benedikt**
**71296 Heimsheim (DE)**

(56) Entgegenhaltungen:
**EP-A1- 1 913 245          EP-A1- 2 163 740
EP-A1- 3 450 714          EP-B1- 1 913 245
EP-B1- 2 163 740          EP-B1- 3 450 714
US-A1- 2013 298 529**

**Beschreibung**

Technisches Gebiet

Die Erfindung betrifft ein Verfahren zur Bestimmung einer Rußmasse zum Beladen eines Partikelfilters mit Rußpartikeln aus einem Abgasmassenstrom eines Verbrennungsmotors und/oder einer Rußmasse für eine Regeneration des Partikelfilters, mithilfe zumindest eines physikalischen Modells, welches ausgehend von gemessenen relevanten Parametern und/oder relevanten Kenndaten die physikalischen Wirkzusammenhänge während des Betriebes des Verbrennungsmotors beschreibt.

Technischer Hintergrund

Normen betreffend der Luftreinhaltung sind mittlerweile in allen Industriestaaten in Form von Grenz- oder Zielwerten, insbesondere auch Partikelgrenzwerten für Verbrennungsmotoren, für die Freisetzung von Schadstoffen, festgelegt. Diese Normen betreffen auch die Verschmutzung und den Verbrauch der Verbrennungsmotoren, mit denen insbesondere Kraft- oder Straßenfahrzeuge ausgerüstet sind.

Die strengen Grenzwerte der heutigen Abgasgesetzgebung sind allein mit innermotorischen Maßnahmen der Verbrennungsmotoren nicht mehr zu erreichen. Um die Abgaswerte auf das vom Gesetzgeber geforderte Niveau zu reduzieren, werden bei Neufahrzeugen Partikelfilter eingesetzt. Dabei handelt es sich meist um Wandstromfilter, die im Laufe des Fahrzeuglebens mit Ruß und Asche beladen werden, die ihrerseits die Filtrationseffizienz des Partikelfilters entscheidend steigern. Während die Asche dauerhaft im Partikelfilter verbleibt und somit einen konstanten Filtrationsbeitrag liefert, ist der Filtrationsbeitrag durch den Ruß insbesondere von der Rußpartikelbeladung abhängig. Die optimale Filtrationseffizienz kann folglich durch einen gezielten Auf- bzw. Abbau einer Rußpartikelschicht unter bestimmten Bedingungen wie z.B. hohe Filtertemperaturen oder Sauerstoffüberschuss erreicht werden.

Die leeren Partikelfilter verfügen über eine eingeschränkte Filtrationseffizienz, deswegen ist es wichtig, dass diese Partikelfilter schnellstmöglich mit Asche oder Ruß vorbeladen werden, um die Filtrationseffizienz auf das nötige Niveau zu bringen. Das gezielte Vorbeladen des Partikelfilters vor dem Einbau oder eine starke Berußung des Partikelfilters kurz nach dem Motorstart sind dazu als Maßnahmen geeignet. Im Laufe der Fahrt erhöht sich der Filterwirkungsgrad, da die einzelnen Poren im Partikelfilter ohnehin zunehmend befüllt werden.

Bei ausreichend hohen Temperaturen und starkem Sauerstoffangebot kann die Rußpartikelschicht sehr schnell abbrennen, was zu einem starken Verlust der Filtrationseffizienz führt. Deswegen ist es von entscheidender Bedeutung die Oxidation der Rußpartikelschicht rechtzeitig anzuhalten und den Partikelfilter nicht allzu weit zu regenerieren und so die Filtrationseffizienz auf dem geforderten Niveau zu halten. Im Lauf des Fahrzeuglebens setzt sich der Partikelfilter immer mehr mit Asche zu, die sich selbst nicht wieder abbrennen lässt und somit für eine permanent hohe Filtrationseffizienz sorgt. Bei allzu hoher Beladung steigt allerdings der Abgasgegendruck, was wiederum zu Verbrauchsnachteilen führt. Als Folge sollte der Partikelfilter ab einer kritischen Beladung ausgetauscht werden.

Der Differenzdruck beim Partikelfilter gilt als eine wichtige Messgröße, die durch Differenz der Drücke am Ein- und Ausgang des Partikelfilters berechnet wird. Durch die Änderung des Differenzdrucks lässt sich eine Änderung im Filterströmungswiderstand ableiten. Aus der Änderung des entsprechenden Strömungswiderstands lässt sich allerdings nur schwer eine Aussage treffen, zu welchem Anteil der Partikelfilter mit Asche bzw. Ruß beladen ist und wo der aktuelle Wirkungsgrad des Partikelfilters tatsächlich liegt.

Aus diesem Grund wurde für die Rußbildung und die Aschebildung ein physikalisches Modell entwickelt, das ausgehend vom gemessenen Differenzdruck und von weiteren Messgrößen bzw. Einflussgrößen / Kenngrößen (z.B. Laufleistung des Fahrzeugs, verwendete Ölsorte usw.) eine Aussage über die Asche- und Rußbeladung im Partikelfilter erlaubt. Damit ist es in bestimmten Fahrsituationen gezielt möglich, den Ruß verstärkt aufzubauen, den Ruß abzubauen oder eine exotherme Rußabbrandreaktion zu stoppen.

Aus dem Stand der Technik sind verschiedene Methoden zur Beladungserkennung bei Partikelfiltern in Kraftfahrzeugen bekannt, bei denen ein Differenzdruck über dem Partikelfilter gemessen wird.

Beispielhaft wird die EP 2065582 A1 genannt, welche ein Verfahren zur Erkennung der Beladung eines Partikelfilters, insbesondere eines Partikelfilters zur Filterung der Abgase einer Brennkraftmaschine offenbart, wobei ein Druckabfall über dem Partikelfilter bestimmt wird und ausgehend von dem Druckabfall auf eine den Strömungswiderstand des Partikelfilters charakterisierende Größe und aus dem Strömungswiderstand auf die Beladung des Partikelfilters geschlossen wird. Dabei wird die den Strömungswiderstand charakterisierende Größe in Abhängigkeit von Betriebspunkten der Brennkraftmaschine charakterisierenden Größen korrigiert.

Dokument EP 2 163 740 A1 offenbart eine DPF-Akkumulationsmengen-Schätzvorrichtung, die eine Akkumulationsmenge in einem DPF (Dieselpartikelfilter) schätzt,. Der DPF ist in einem Abgasdurchgang installiert, wobei die DPF-Akkumulationsmengen-Schätzvorrichtung Folgendes umfasst: ein PM-Emissionsmengenmodell, in dem eine PM-Emissionsmenge auf der Grundlage eines Betriebszustands eines Motors eingestellt wird; ein PM-Regenerationsmengenmodell, in dem eine PM-Regenerationsmenge auf der Grundlage der Temperaturdifferenz zwischen einer Auslasstemperatur und einer Einlasstemperatur des DPF eingestellt wird; und ein DPF-Differenzdruckmodell, in dem eine PM-Akkumulationsmenge auf der Grundlage eines Differenzdrucks zwischen einer Abgasströmungsrate und dem DPF eingestellt wird. Die Emissionsmenge aus dem PM-Emissionsmengenmodell, die Regenerationsmenge aus dem PM-Regenerationsmengenmodell und eine korrigierte PM-Akkumulationsmenge, die durch Korrigieren des geschätzten Wertes der PM-Akkumulationsmenge aus dem DPF-Differenzdruckmodell unter Verwendung eines Koeffizienten K, der auf der Grundlage einer Motordrehzahl und einer Motorkraftstoffeinspritzmenge bestimmt wird, erhalten wurde, werden verwendet, um eine geschätzte PM-Akkumulationsmenge des DPF zu berechnen.

Dokument US 2013/298529 A1 offenbart ein Verfahren zur Steuerung der Regeneration in einer Nachbehandlungskomponente eines Motors, umfassend: Empfangen eines Signals, das auf eine Druckänderung in einer Nachbehandlungskomponente anspricht; Berechnen einer Schätzung der angesammelten Partikel in der Nachbehandlungskomponente unter Verwendung eines Rußansammlungsmodells, das kalibriert ist, um den Betrieb des Motors bei einer Referenzbedingung zu simulieren; Bestimmen eines Rußmodellkorrekturfaktors, der zumindest teilweise auf einer Umgebungstemperaturkorrektur basiert; Anwenden des RußmodellKorrekturfaktors auf die Schätzung der akkumulierten Partikelmasse in der Nachbehandlungskomponente, um eine temperaturkompensierte Schätzung der akkumulierten Partikelmasse in der Nachbehandlungskomponente zu erzeugen; Vergleichen der temperaturkompensierten Schätzung der akkumulierten Partikelmasse in der Nachbehandlungskomponente mit einem vorbestimmten Schwellenwert, der mit der Nachbehandlungskomponente verbunden ist; und Einleiten einer Abhilfemaßnahme, wenn die temperaturkompensierte Schätzung der angesammelten Partikelmasse in der Nachbehandlungskomponente den vorbestimmten Schwellenwert überschreitet.

Dokument EP 3 450 714 A1 offenbart ein Verfahren zum Steuern eines Dieselmotorsystems, das einen in die Abgasleitung des Motors eingefügten Partikelfilter und eine elektronische Motorsteuereinheit zum Steuern einer Vielzahl von Kraftstoffeinspritzdüsen umfasst, die den Zylindern des Motors zugeordnet sind. Wenn eine geschätzte akkumulierte Partikelmasse in dem Filter einen vorgegebenen Schwellenwert erreicht, wird ein Steuermodus der Einspritzdüsen aktiviert, der den Beginn eines automatischen Regenerationsschritts des Filters durch eine Erhöhung der Temperatur der zum Filter geleiteten Abgase bewirkt, die ausreicht, um die Partikel im Filter zu verbrennen. Die geschätzte akkumulierte Partikelmasse wird als die Summe der geschätzten momentanen akkumulierten Partikelmassen berechnet, die gemäß einem ersten Kennfeld auf der Grundlage von Motorbetriebsbedingungen berechnet werden. Während des Regenerationsschritts werden Werte empfangen, die den Zustand des Partikelfilters anzeigen, und in Abhängigkeit von den den Zustand des Filters anzeigenden Werten, eine tatsächliche momentane verbrannte Partikelmasse berechnet. Es werden die tatsächlichen momentanen verbrannten Partikelmassen summiert und ein temporärer Korrekturfaktor als Funktion der Summe der tatsächlichen momentanen verbrannten Partikelmassen und der Summe der geschätzten momentanen akkumulierten Partikelmassen berechnet, wobei der temporäre Korrekturfaktor für einen Fehler zwischen dem theoretischen Wert und dem tatsächlichen Wert repräsentativ ist. Der mindestens eine Korrekturfaktor, der in einem zweiten Kennfeld enthalten ist, wird in Abhängigkeit von dem temporären Korrekturfaktor und den Motorbetriebsbedingungen, die während eines Akkumulationsschritts aufgetreten sind, akkumuliert. Während des Akkumulationsschritts wird die geschätzte momentane Partikelmasse, die gemäß dem ersten Kennfeld und den Motorbetriebsbedingungen berechnet wurde, mit einem Korrekturfaktor multipliziert, der gemäß dem zweiten Kennfeld und den Motorbetriebsbedingungen berechnet wurde.

Die Druckschrift EP 1 913 245 A1 offenbart eine Vorrichtung zum Schätzen der Rußerzeugungsmenge für einen Verbrennungsmotor, die eine Einrichtung zum Schätzen der Rußerzeugungsmenge enthält, die in einer Verbrennungskammer des Motors als Ergebnis einer Reaktion von Kraftstoff erzeugt wird, wobei die Einrichtung zum Schätzen der Rußerzeugungsmenge umfasst: eine Einrichtung zum Berechnen der Rußerzeugungsgeschwindigkeit, die eine Erzeugungsgeschwindigkeit des Rußes unter Verwendung eines Reaktionsmodells in Bezug auf einen Reaktionsprozess, bei dem der Ruß aus dem Kraftstoff erzeugt wird, berechnet, wobei die Rußerzeugungsmenge auf der Grundlage der berechneten Rußerzeugungsgeschwindigkeit geschätzt wird.

Es ist wünschenswert, ein Verfahren zur Bestimmung einer Rußmasse zum Beladen eines Partikelfilters mit Rußpartikeln aus einem Abgasmassenstrom eines Verbrennungsmotors und/oder einer Rußmasse für eine Regeneration des Partikelfilters anzugeben, dass eine genauere Aussage über die Asche- und Rußbeladung im Partikelfilter erlaubt.

Offenbarung der Erfindung

Erfindungsgemäß sind ein Verfahren zur Bestimmung einer Rußmasse zum Beladen eines Partikelfilters mit Rußpartikeln aus einem Abgasmassenstrom eines Verbrennungsmotors und/oder einer Rußmasse für eine Regeneration des Partikelfilters mithilfe zumindest eines physikalischen Modells gemäß Anspruch 1 sowie ein Computerprogrammprodukt und eine Steuereinrichtung gemäß den nebengeordneten Ansprüchen vorgesehen.

Vorteilhafte Aus- und Weiterbildungen, welche einzeln oder in Kombination miteinander eingesetzt werden können, sind Gegenstand der abhängigen Unteransprüche.

Gemäß einem ersten Aspekt ist ein Verfahren gemäss Anspruch 1 vorgesehen.

Das physikalische Modell wird auch als Rußmodell bezeichnet, welches im Wesentlichen die Menge an Ruß in dem Partikelfilter unter Berücksichtigung des Druckabfalls in der Abgasströmung unter Verwendung der gegebenen und bekannten Parameter / Kenndaten und der zugrunde liegenden physikalischchemischen Prozesse ermittelt. Ein solches Rußmodell umfasst vorzugsweise verschiedene Teilmodelle.

Parameter und Kenndaten sind beispielsweise Messgrößen bzw. Einflussgrößen / Kenngrößen (z.B. Laufleistung des Fahrzeugs, verwendete Ölsorte usw.).

Erfindungsgemäß wurde erkannt, dass dieses Modell bzw. diese Modelle nicht alle Einflüsse, wie beispielsweise Kraftstoffqualität, Leckagen etc. berücksichtigen. Damit ist es schwer, gezielte Maßnahmen einzuleiten, um den Wirkungsgrad des Partikelfilters im Optimum zu halten.

Durch die Ergänzung um zumindest ein Fehlermodell können die vorherrschenden Wirkzusammenhänge in den physikalischen (Teil)Modellen wesentlich besser berücksichtigt/abgebildet werden. Diese Fehlermodelle bilden vorzugsweise solche Effekte ab, die im physikalischen Modell nicht berücksichtigt werden. Auch können sie beispielsweise mögliche Schwächen der Sensorik zur Differenzdruckmessung (z.B. Offsets) entsprechend kompensieren.

Die physikalische Grundstruktur des physikalischen Modells wird dagegen bewusst beibehalten.

Dadurch lässt sich die Modellgenauigkeit signifikant erhöhen. Dadurch wird eine genauere Information zur Beladung des Partikelfilters eines Verbrennungsmotors (Otto oder Diesel) erzielt, so dass die Maßnahmen zur Verbesserung der Filtrationseffizienz, wie beispielsweise Anpassungen in einem Kraftstoffsystem, beispielsweise so dass größere/kleine Rußpartikel entstehen und/oder Maßnahmen zum Bauteilschutz, wie beispielsweise ein Schubabschaltverbot, d.h. Einspritzung trotz Schubphase, um Sauerstoffüberschuss zu verringern, zielgerichtet eingeleitet werden können. Durch die mittels der Erfindung mögliche hohe Filtrationseffizienz können die anspruchsvollen Grenzwerte in der Abgasgesetzgebung eingehalten werden. Weiterhin kann mittels der Erfindung der Kraftstoffverbrauch und der Kohlenstoffdioxidausstoß optimiert (verringert) werden.

Durch die Erfindung kann die Beladung und die Filtrationseffizienz eines Partikelfilters eines Verbrennungsmotors (Otto oder Diesel) im laufenden Betrieb genauer bestimmt werden. Dadurch können frühzeitig Maßnahmen wie Anpassungen im Kraftstoffsystem oder die Einleitung eines Schubabschaltverbots vorgenommen werden, um die Filtrationseffizienz rechtzeitig zu erhöhen oder aus Bauteilschutzgründen, wie beispielsweise bei einer hohen Temperaturbelastung beim Abbrand, einer zu hohen Ansammlung von Rußpartikeln im Partikelfilter entgegenzuwirken. Somit kann einem erhöhten Kraftstoffverbrauch und einem erhöhten Kohlendioxidausstoß die damit verbunden sind, entgegengewirkt werden.

Das zumindest eine physikalische Modell umfasst verschiedene Teilmodelle mit für das jeweilige Teilmodell gemessenen relevanten Parametern und/oder relevanten Kenndaten. Dabei können die einzelnen Teilmodelle aufeinander basieren/aufbauen.

Jedes der Teilmodelle wird um ein Fehlermodell ergänzt, wobei die Fehlermodelle zumindest teilweise auf den für das jeweilige Teilmodell relevanten Parameter und/oder relevanten Kenndaten basiert. Vorzugsweise basieren die Fehlermodelle vollständig auf den für das jeweilige Teilmodell relevanten Parameter und/oder relevanten Kenndaten.

In einer weiteren Ausführung wird das zumindest eine Fehlermodell anhand von zusätzlichen Messungen offline trainiert. Durch zusätzliche Messungen an bzw. mit dem vorhandenen Partikelfilter wird ein datenbasiertes Fehlermodell erstellt. Insbesondere kann dies von zusätzlichen Messungen an Partikelfiltern mehrerer Motoren im Rahmen einer Erprobung im Vorfeld der Inbetriebnahme vorgenommen werden. Dadurch lässt sich ein solches Fehlermodell besonders gut bzw. einfach erstellen.

Weiterhin ist das zumindest eine Fehlermodell als ein Gauß-Prozess-Modell ausgebildet. Dieses ist ein datenbasiertes Funktionsmodell, das auf der Gauß-Prozess-Regression basiert. Die Gauß-Prozess-Regression ist eine vielseitige Methode zur datenbasierten Modellierung komplexer physikalischer Systeme. Damit kann das Fehlermodell gut abgebildet werden.

Weiterhin kann in einem nächsten Ausführungsbeispiel in dem zumindest einem physikalischen Modell als auch im dazugehörigen Fehlermodell sowohl die Rußmasse zum Beladen und/oder die Rußmasse für die Regeneration jeweils für eine Filterwand bestimmt werden. Auch kann in dem zumindest einem physikalischen Modell als auch im dazugehörigen Fehlermodell sowohl die Rußmasse zum Beladen und/oder die Rußmasse für die Regeneration jeweils für eine Rußpartikelschicht bestimmt werden. Dadurch wird dem Rechnung getragen, dass der Ruß sich sowohl in den Ein- und Auslasskanälen in Form einer Rußpartikelschicht oder aber direkt in der Filterwand absetzen kann.

Dabei ist die Rußpartikelschicht diejenige Schicht, die vor allem an der Oberfläche der Filterwand hängenbleibt. Die Rußpartikelschicht wird auch als Filterkuchen bezeichnet. Somit wird eine genauere Bestimmung der Rußmasse möglich.

In weiterer Ausführungsform ist als zumindest eine Eingangsgröße in dem zumindest einem physikalischen Modell als auch in dem dazugehörigen Fehlermodell eine Rußpartikelmasse oder eine Partikelanzahl vorgesehen.

Ferner wird die Aufgabe gelöst durch ein Computerprogrammprodukt mit Programmcodemitteln zur Durchführung des wie oben beschriebenen Verfahrens. Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. In Zusammenhang mit dem Computerprogrammprodukt ergeben sich die Vorteile, die bereits in Zusammenhang mit dem Verfahren erläutert wurden.

Weiterhin wird die Aufgabe gelöst durch eine Steuereinrichtung zur Steuerung eines Verbrennungsmotors mit einem Partikelfilter, wobei die Steuereinrichtung dafür ausgebildet ist, eine Rußmasse zum Beladen eines Partikelfilters mit Rußpartikeln aus einem Abgasmassenstrom eines Verbrennungsmotors und/oder eine Rußmasse für die Regeneration, anhand eines wie oben beschriebenen Verfahrens zu bestimmen.

In weiterer Ausführungsform ist die Steuereinrichtung dafür ausgebildet, eine Regeneration des Partikelfilters anhand der bestimmten Rußmasse vorzunehmen. Die Regeneration wird dabei vorzugsweise bei hoher Rußmasse eingeleitet.

In diesem Fall ist die Steuereinrichtung zur Durchführung des Verfahrens eingerichtet, das heißt, dass die Steuereinrichtung Anweisungen aufweist, aufgrund derer ein Verfahren nach einer der zuvor beschriebenen Ausführungsformen durchgeführt wird. In Zusammenhang mit der Steuereinrichtung verwirklichen sich die Vorteile, die bereits in Zusammenhang mit dem Verfahren beschrieben wurden.

Kurzbeschreibung der Zeichnungen

Bevorzugte Ausführungsformen der vorliegenden Erfindung werden nachfolgend anhand der beigefügten Zeichnungen näher erläutert. Es zeigen:

Figur 1: eine Übersicht eines physikalischen Modells mit einzelnen Teilmodellen f1, f2, f31, f32 für den Partikelfilter gemäß dem Stand der Technik,

Figur 2: eine Übersicht des physikalischen Modells mit einzelnen Teilmodellen f4, f5 für den Partikelfilter gemäß dem Stand der Technik,

Figur 3: eine Übersicht eines physikalischen Modells mit einzelnen Teilmodellen f1, f2, f31,f32 und den Fehlermodellen für den Partikelfilter gemäß der Erfindung,

Figur 4: eine Übersicht des physikalischen Modells mit einzelnen Teilmodellen f4, f5 und den Fehlermodellen für den Partikelfilter gemäß der Erfindung, und

Figur 5: eine schematische Darstellung eines Partikelfilters mit einer erfindungsgemäßen Steuereinheit im Einsatz.

Beschreibung von Ausführungsformen

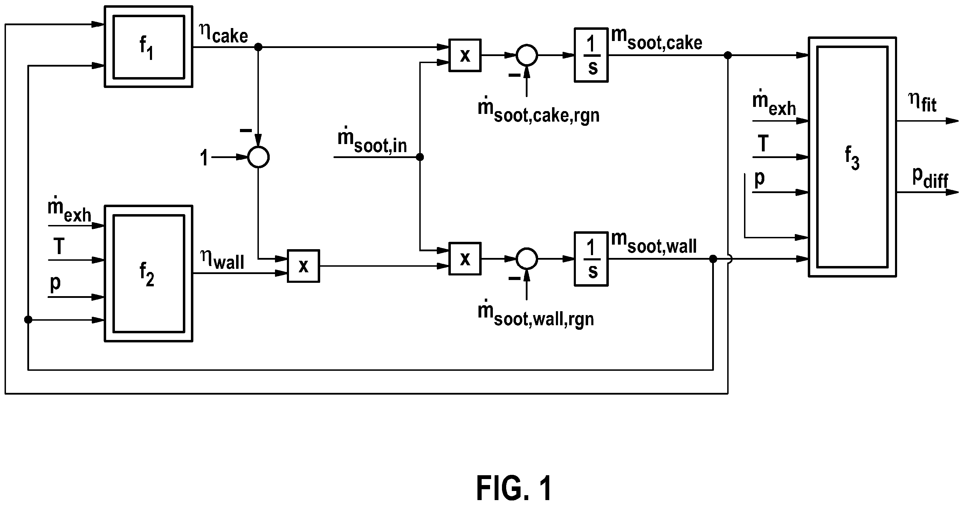

Figur 1 zeigt eine Übersicht eines physikalischen Modells mit einzelnen Teilmodellen f1, f2, f31,f32 für einen Partikelfilter gemäß dem Stand der Technik. Ein solcher Partikelfilter weißt dabei eine Filterwand auf und eine bereits vorhandene Rußpartikelschicht, welche regelmäßig abgebrannt wird. Ruß wird sowohl in der Rußpartikelschicht als auch in der Filterwand abgebrannt. Dabei werden in dem physikalischen Modell die nicht messbaren Größen wie Beladung und Filtrationseffizienz vorzugsweise ausgehend von messbaren oder anderen berechneten Größen wie Abgasmassenstrom, Druck und Temperatur vor dem Partikelfilter, der Temperatur im Partikelfilter, der Sauerstoffkonzentration im Abgasmassenstrom und dem Massenstrom an Rohemissionen bestimmt.

Bei der Berechnung der Filtrationseffizienz wird zudem die Massenverteilung des Rußes zwischen Filterwand und aufgebauter Rußpartikelschicht bestimmt.

Hierzu müssen im physikalischen Modell sowohl die Rußmasse zum Beladen als auch die Rußmasse für die Regeneration jeweils für Filterwand und Rußpartikelschicht bestimmt werden.

Das vorliegende physikalische Modell rechnet hierzu als Basisgröße mit einer Rußpartikelmasse. Auch kann die Berechnung auf eine Partikelanzahl umgestellt werden.

Zur Berechnung des Partikelmassenstroms zum Beladen und des Partikelmassenstroms beim Regenerationsvorgang in der Filterwand und in der Rußpartikelschicht wird nun das physikalische Modell verwendet. Dieses ist üblicherweise als nichtlineares Modell ausgebildet, welches die physikalischen Wirkzusammenhänge beschreibt. Das physikalische Modell umfasst mehrere Teilmodelle f1,..,f6, welche nachfolgend noch beschrieben werden.

Die Beladung der Filterwand $\dot{m}_{soot,wall}$ (Beladung Filterwand) und der Rußpartikelschicht $\dot{m}_{soot,cake}$ (Beladung vorhandene Rußpartikelschicht) wird dabei durch folgende Gleichungen beschrieben:

$$\dot{m}_{soot,wall} = (1 - \eta_{cake})\eta_{wall}\dot{m}_{soot,in}$$

$$\dot{m}_{soot,cake} = \eta_{cake}\dot{m}_{soot,in}$$

wobei $\eta_{cake}$ der Wirkungsgrad der Rußpartikelschicht, $\eta_{wall}$ der Wirkungsgrad der Filterwand, und $\dot{m}_{soot,in}$ der Rußmassenstrom am Eingang des Partikelfilters ist.

Dabei wird der Wirkungsgrad der Rußpartikelschicht $\eta_{cake}$ und der Wirkungsgrad der Filterwand $\eta_{wall}$ durch folgende Teilmodelle f1, f2 bestimmt:

$$\eta_{cake} = f_1\big(m_{soot,wall}, m_{soot,cake}\big)$$

$$\eta_{wall} = f_2\big(m_{soot,wall}, \dot{m}_{exh}, T_{us}, p_{us}\big)$$

wobei $m_{soot,wall}$ der Ruß in der Filterwand und $m_{soot,cake}$ der Ruß der Rußpartikelschicht ist, und $\dot{m}_{exh}$ der Abgasmassenstrom, $p_{us}$ der Druck vor dem Partikelfilter und $T_{us}$ die Temperatur vor dem Partikelfilter ist.

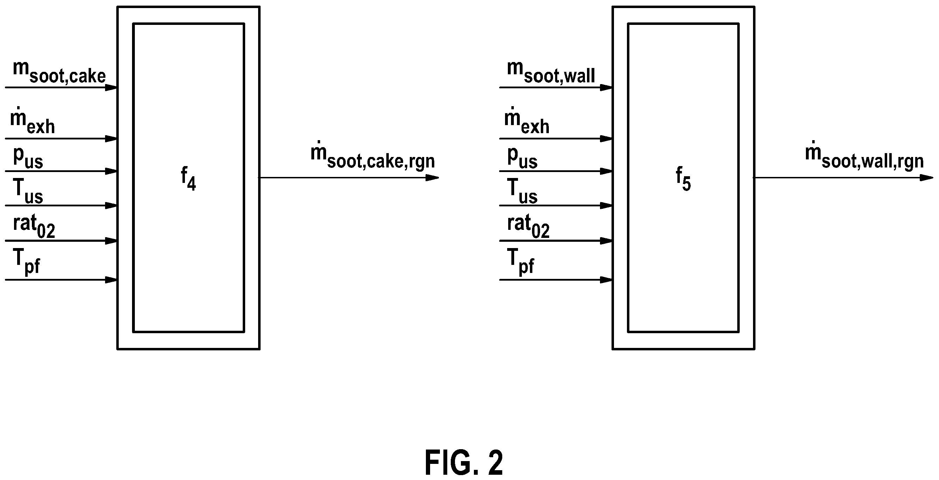

Der Rußabbrand in der Rußpartikelschicht $m_{soot,cake,rgn}$ das heißt, der Partikelmassenstrom für die Regeneration in der Rußpartikelschicht wird durch folgendes Teilmodell f4 bestimmt (Figur 2):

$$\dot{m}_{soot,cake,rgn} = f_4\big(m_{soot,cake}, \dot{m}_{exh}, p_{us}, T_{us}, rat_{O2}, T_{pf}\big)$$

wobei $\dot{m}_{soot,cake}$ der Ruß der Rußpartikelschicht, $\dot{m}_{exh}$ der Abgasmassenstrom, $p_{us}$ der Druck vor dem Partikelfilter, $T_{us}$ die Temperatur vor dem Partikelfilter, $rat_{O2}$ der Sauerstoff im Abgasmassenstrom und $T_{pf}$ die mittlere Temperatur im Partikelfilter ist.

Der Rußabbrand in der Filterwand $\dot{m}_{soot,wall,rgn}$, das heißt, der Partikelmassenstrom für die Regeneration in der Filterwand wird dabei durch nachfolgendes Teilmodell f5 bestimmt (Figur 2):

$$\dot{m}_{soot,wall,rgn} = f_5\big(m_{soot,wall}, \dot{m}_{exh}, p_{us}, T_{us}, rat_{O2}, T_{pf}\big)$$

wobei $m_{soot,wall}$ der Ruß in der Filterwand, $\dot{m}_{exh}$ der Abgasmassenstrom, $p_{us}$ der Druck vor dem Partikelfilter, $T_{us}$ die Temperatur vor dem Partikelfilter, $rat_{O2}$ der Sauerstoff im Abgasmassenstrom und $T_{pf}$ die mittlere Temperatur im Partikelfilter ist.

Somit ist es möglich, den Partikelmassenstrom zu berechnen, mit dem die Wand und die Rußpartikelschicht im Partikelfilter tatsächlich beladen werden. Mithilfe der beiden Teilmodelle, hier der Regenerationsmodelle f4 und f5 für die Filterwand und Rußpartikelschicht, werden die jeweiligen Massenänderungen an Partikeln während eines Abbrandvorgangs berechnet. Die Differenzen aus den entsprechenden Massenstromänderungen werden im Anschluss aufintegriert. Daraus ergibt sich schließlich die Massen an Partikeln, die im Partikelfilter in Wand und Rußpartikelschicht verbleiben.

Ist die Masse bzw. Anzahl an Partikeln in der Wand und in der Rußpartikelschicht des Partikelfilters bekannt, kann über ein weiteres Teilmodell f31 ,f32 (Figur 1), hier als ein Differenzdruckmodell ausgebildet, schließlich der Modellwert für den Differenzdruck $\Delta p$ berechnet werden, als auch der angepasste Wirkungsgrad $\eta_{flt}$ berechnet werden.

$$\Delta p = f_{31}\big(m_{soot,cake}, m_{soot,wall}, \dot{m}_{exh}, p_{us}, T_{us}\big)$$

$$\eta_{flt} = f_{32}\big(m_{soot,cake}, m_{soot,wall}, \dot{m}_{exh}, p_{us}, T_{us}\big)$$

wobei $m_{soot,cake}$ der Ruß in der Rußpartikelschicht, $m_{soot,wall}$ der Ruß in der Filterwand, $\dot{m}_{exh}$ der Abgasmassenstrom, $p_{us}$ der Druck vor dem Partikelfilter, $T_{us}$ die Temperatur vor dem Partikelfilter ist.

Erfindungsgemäß wurde erkannt, dass nicht alle Wirkzusammenhänge in den physikalischen Teilmodellen berücksichtigt werden können.

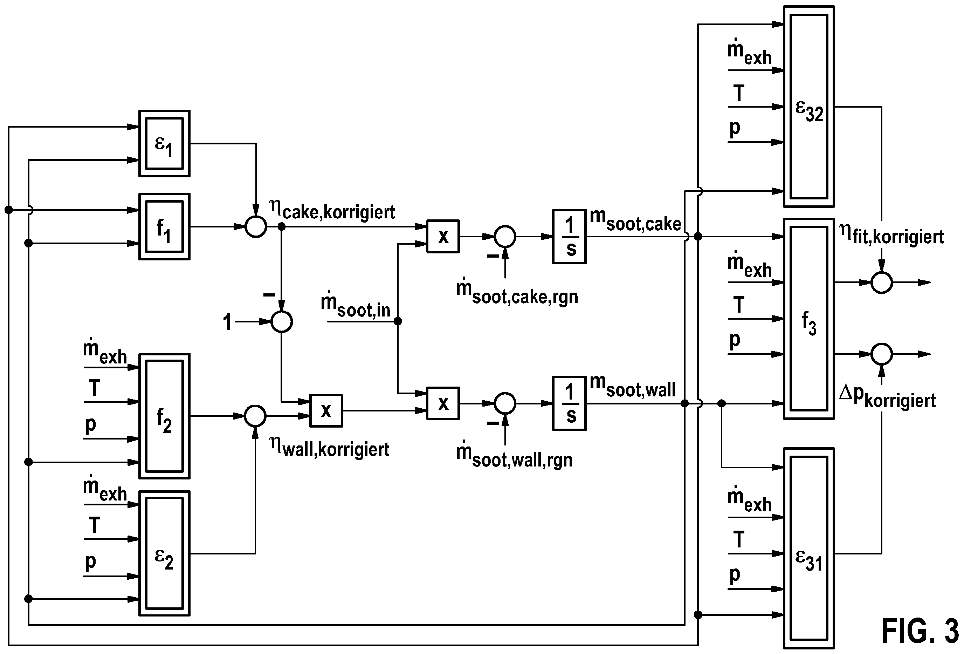

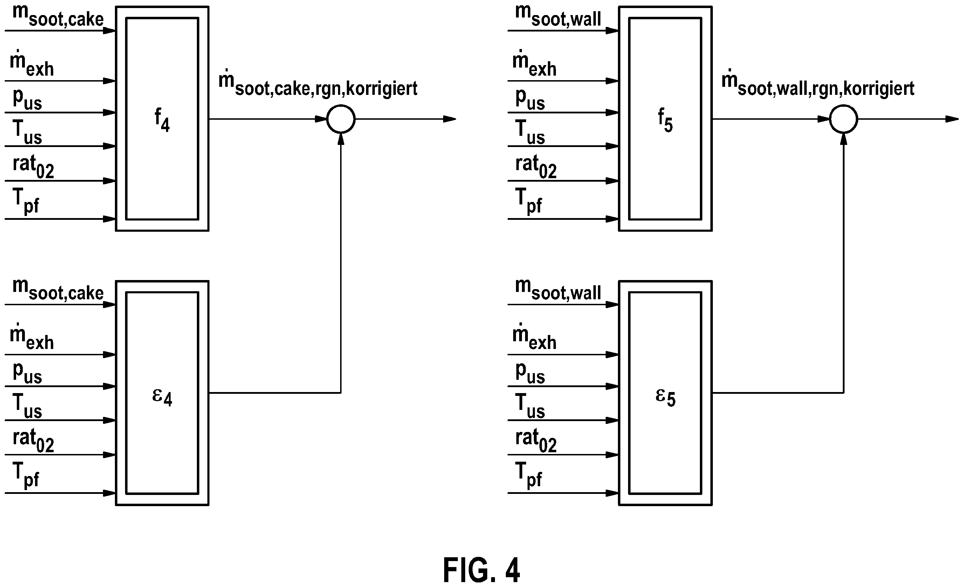

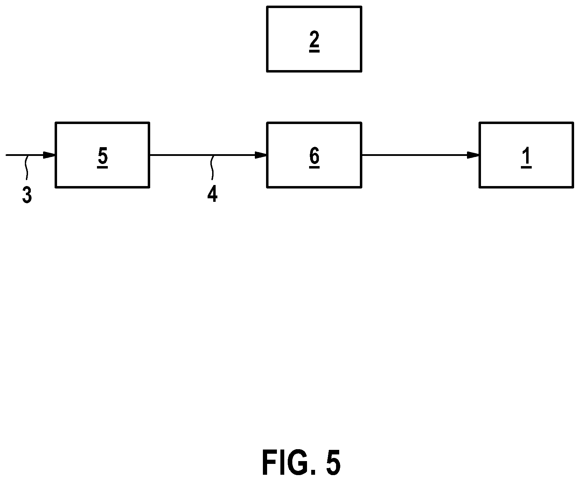

Figur 3 und Figur 4 zeigen eine Übersicht eines physikalischen Modells mit einzelnen Teilmodellen f1, f2, f31,f32, f4, f5, f6 sowie den Fehlermodellen $\varepsilon_1$, $\varepsilon_2$, $\varepsilon_{31}$, $\varepsilon_{32}$, $\varepsilon_4$, $\varepsilon_5$, $\varepsilon_6$ für den Partikelfilter 1 (Figur 5) gemäß der Erfindung. Ein solcher Partikelfilter weißt dabei ebenfalls die Filterwand auf und die bereits vorhandene Rußpartikelschicht, welche regelmäßig abgebrannt wird.

Diese Fehlermodelle $\varepsilon_1$, $\varepsilon_2$, $\varepsilon_{31}$, $\varepsilon_{32}$, $\varepsilon_4$, $\varepsilon_5$, $\varepsilon_6$ bilden solche Effekte ab, die im physikalischen Modell im Stand der Technik nicht berücksichtigt werden und/oder sie können mögliche Schwächen einer Sensorik zur Differenzdruckmessung (z.B. Offsets) entsprechend kompensieren.

Durch die Fehlermodelle $\varepsilon_1$, $\varepsilon_2$, $\varepsilon_{31}$, $\varepsilon_{32}$, $\varepsilon_4$, $\varepsilon_5$, $\varepsilon_6$ lässt sich die Modellgenauigkeit signifikant erhöhen.

Die Fehlermodelle $\varepsilon_1$, $\varepsilon_2$, $\varepsilon_{31}$, $\varepsilon_{32}$, $\varepsilon_4$, $\varepsilon_5$, $\varepsilon_6$ können anhand von zusätzlichen Messungen beispielsweise mehrerer Verbrennungsmotoren / Partikelfilter im Rahmen einer Erprobung, beispielsweise im Vorfeld der Inbetriebnahme, offline trainiert werden.

Die Fehlermodelle $\varepsilon_1$, $\varepsilon_2$, $\varepsilon_{31}$, $\varepsilon_{32}$, $\varepsilon_4$, $\varepsilon_5$, $\varepsilon_6$ sind vorzugsweise als Gauß-Prozess-Modelle ausgebildet.

Figur 3 zeigt dabei das Teilmodell f1 mit dem ergänzenden Fehlermodell $\varepsilon_1$ sowie das Teilmodell f2 mit dem ergänzenden Fehlermodell $\varepsilon_2$.

Dabei wird der Wirkungsgrad der Rußpartikelschicht $\eta_{cake,korrigiert}$ und der Wirkungsgrad der Filterwand $\eta_{wall,korrigiert}$ durch folgende Teilmodelle f1, f2 und deren Fehlermodelle $\varepsilon_1$, $\varepsilon_2$ bestimmt:

$$\eta_{cake,korrigiert} = f_1\big(m_{soot,wall}, m_{soot,cake}\big) + \varepsilon_1$$

$$\eta_{wall,korrigiert} = f_2\big(m_{soot,wall}, \dot{m}_{exh}, T_{us}, p_{us}\big) + \varepsilon_2$$

wobei $m_{soot,wall}$ der Ruß in der Filterwand und $m_{soot,cake}$ der Ruß der Rußpartikelschicht ist, und $\dot{m}_{exh}$ der Abgasmas-senstrom, $p_{us}$ der Druck vor dem Partikelfilter 1 (Figur 5) und $T_{us}$ die Temperatur vor dem Partikelfilter 1 (Figur 5) sind.

Vorzugsweise basieren die Fehlermodelle $\varepsilon_1$, $\varepsilon_2$ auf den für das Teilmodell f1 und f2 gleichen relevanten Parameter und/oder relevanten Kenndaten, wobei die Fehlermodelle $\varepsilon_1$, $\varepsilon_2$ beispielsweise anhand zusätzlicher Mes-sungen beispielsweise durch mehrere Verbrennungsmotoren / Partikelfilter im Rahmen einer Erprobung, welche im Vorfeld der Inbetriebnahme offline trainiert werden, ermittelt /bestimmt werden.

Ist die Masse bzw. Anzahl an Partikeln in der Wand und in der Rußpartikelschicht des Partikelfilters 1 (Figur 5) bekannt, kann über das weitere Teilmodell f31,f32 (Figur 3) mit einem ergänzten Fehlermodell $\varepsilon_{31}$ schließlich der Modellwert für den Differenzdruck $\Delta p_{korrigiert}$ bestimmt werden; als auch der angepasste Wirkungsgrad $\eta_{flt,korgiert}$ mit dem Fehlermodell $\varepsilon_{32}$ neu bestimmt werden:

$$\Delta p_{korrgiert} = f_{31}\big(m_{soot,cake}, m_{soot,wall}, \dot{m}_{exh}, p_{us}, T_{us}\big) + \varepsilon_{31}$$

$$n_{flt} = f_{32}\big(m_{soot,cake}, m_{soot,wall}, \dot{m}_{exh}, p_{us}, T_{us}\big) + \varepsilon_{32}$$

wobei $m_{soot,cake}$ der Ruß in der Rußpartikelschicht, $m_{soot,wall}$ der Ruß in der Filterwand , $\dot{m}_{exh}$ der Abgasmassenstrom, $T_{us}$ die Temperatur vor dem Partikelfilter 1 (Figur 5) und $p_{us}$ der Druck vor dem Partikelfilter 1 (Figur 5) ist.

Vorzugsweise basieren auch hier die Fehlermodelle $\varepsilon_{31}$, $\varepsilon_{32}$ auf den für das Teilmodell f31,f32 gleichen relevanten Parameter und/oder relevanten Kenndaten, wobei die Fehlermodelle $\varepsilon_{31}$, $\varepsilon_{32}$ beispielsweise anhand zusätzlicher Messungen beispielsweise durch mehrere Verbrennungsmotoren / Partikelfilter im Rahmen einer Erprobung, welche im Vorfeld der Inbetriebnahme offline trainiert werden, ermittelt /bestimmt werden.

Der Rußabbrand in der Rußpartikelschicht $\dot{m}_{soot,cake,rgn,korrigiert}$, das heißt, der Partikelmassenstrom für die Regeneration in der Rußpartikelschicht, wird durch nachfolgendes Teilmodell f4 mit einem ergänzenden Fehlermodell $\varepsilon_5$ bestimmt (Figur 4):

$$\dot{m}_{soot,cake,rgn,korrigiert} = f_4\big(m_{soot,cake}, \dot{m}_{exh}, p_{us}, T_{us}, rat_{O2}, T_{pf}\big) + \varepsilon_4$$

wobei $m_{soot,cake}$ der Ruß der Rußpartikelschicht, $\dot{m}_{exh}$ der Abgasmassenstrom, $p_{us}$ der Druck vor dem Partikelfilter 1 (Figur 5), $T_{us}$ die Temperatur vor dem Partikelfilter 1 (Figur 5), $rat_{O2}$ der Sauerstoff im Abgasmassenstrom und $T_{pf}$ die mittlere Temperatur im Partikelfilter 1 (Figur 5) ist.

Der Rußabbrand in der Filterwand $\dot{m}_{soot,wall,rgn,korrigiert}$ das heißt, der Partikelmassenstrom für die Regeneration in der Filterwand, wird dabei durch nachfolgendes Teilmodell f5 mit einem ergänzenden Fehlermodell $\varepsilon_5$ bestimmt (Figur 4):

$$\dot{m}_{soot,wall,rgn,korrigiert} = f_5\big(m_{soot,wall}, \dot{m}_{exh}, p_{us}, T_{us}, rat_{O2}, T_{pf}\big) + \varepsilon_5$$

wobei $m_{soot,wall}$ der Ruß in der Filterwand, $\dot{m}_{exh}$ der Abgasmassenstrom, $p_{us}$ der Druck vor dem Partikelfilter 1 (Figur 5), $T_{us}$ die Temperatur vor dem Partikelfilter 1 (Figur 5), $rat_{O2}$ der Sauerstoff im Abgasmassenstrom und $T_{pf}$ die mittlere Temperatur im Partikelfilter 1 (Figur 5) ist.

Vorzugsweise basieren auch hier die Fehlermodelle $\varepsilon_4$ , $\varepsilon_5$ auf den für das Teilmodell f4, f5 gleichen relevanten Parameter und/oder relevanten Kenndaten, wobei die Fehlermodelle $\varepsilon_4$, $\varepsilon_5$ beispielsweise anhand zusätzlicher Messungen beispielsweise durch mehrere Verbrennungsmotoren / Partikelfilter im Rahmen einer Erprobung, welche im Vorfeld der Inbetriebnahme offline trainiert werden, ermittelt /bestimmt werden.

In der Regel sind die meisten Filterparameter aus den mitgelieferten Datenblätter bekannt und können direkt für die Parametrisierung im Modell benutzt werden. Manche Parameter wie z.B. eine Permeabilität oder Aktivierungsenergien können experimentell anhand von ausgesuchten Messungen, beispielsweise von einem einzelnen Partikelfilter bestimmt werden.

Figur 5 zeigt schematisch den Partikelfilter 1 im Betrieb, in dem das erfindungsgemäße Verfahren mit einer erfindungsgemäßen Steuereinheit 2 eingesetzt werden kann. Ein mit Kraftstoff betriebener Verbrennungsmotor 5 wird über einen Ansaugtrakt 3 Frischluft zugeführt. Abgas des Verbrennungsmotors 5 wird über einen Abgaskanal 4 abgeführt und unter anderem mittels eines Katalysators 6 und des Partikelfilters 1 gereinigt. Im Betrieb des Verbrennungsmotors 5 filtert der Partikelfilter 1 Rußpartikel aus dem Abgas.

Ist der Partikelfilter 1 mit Partikeln beladen, erhöht sich der Differenzdruck des Abgasstroms durch den Partikelfilter 1. Es ist dann ein Regenerationsvorgang erforderlich, in dem die Partikel verbrannt werden. Dazu ist die Beladung des Partikelfilters 1 möglichst genau festzulegen. Ein solcher Regernationsvorgang kann mittels der erfindungsgemäßen Steuereinheit 2 gesteuert werden.

**Patentansprüche**

1. Verfahren zur Bestimmung einer Rußmasse zum Beladen eines Partikelfilters (1) mit Rußpartikeln aus einem Abgasmassenstrom eines Verbrennungsmotors und/oder einer Rußmasse für eine Regeneration des Partikelfilters (1), mithilfe zumindest eines physikalischen Modells, welches ausgehend von gemessenen relevanten Parametern und/oder relevanten Kenndaten die physikalischen Wirkzusammenhänge während des Betriebes des Verbrennungsmotors (5) beschreibt,

   wobei in dem zumindest einen physikalischen Modell nicht messbare Größen, wie Beladung und Filtrationseffizienz, ausgehend von messbaren oder anderen berechneten Größen, wie Abgasmassenstrom, Druck und Temperatur vor dem Partikelfilter (1), einer Temperatur im Partikelfilter (1), einer Sauerstoffkonzentration im Abgasmassenstrom und einem Massenstrom an Rohemissionen bestimmt werden, wobei das zumindest eine physikalische Modell verschiedene Teilmodelle (f1, f2, f31, f32, f4, f5, f6) mit für das jeweilige Teilmodell (f1, f2, f31, f32, f4, f5, f6) gemessenen relevanten Parametern und/oder relevanten Kenndaten umfasst, **dadurch gekennzeichnet, dass** jedes der Teilmodelle (f1, f2, f31, f32, f4, f5, f6) um ein datenbasiertes Fehlermodell ($\varepsilon_1$, $\varepsilon_2$, $\varepsilon_{31}$, $\varepsilon_{32}$, $\varepsilon_4$, $\varepsilon_5$, $\varepsilon_6$) ergänzt wird, wobei die datenbasierten Fehlermodelle ($\varepsilon_1$, $\varepsilon_2$, $\varepsilon_{31}$, $\varepsilon_{32}$, $\varepsilon_4$, $\varepsilon_5$, $\varepsilon_6$) zumindest teilweise auf den für das jeweilige Teilmodell (f1, f2, f31, f32, f4, f5, f6) relevanten Parameter und/oder relevanten Kenndaten basieren, wobei jedes der Fehlermodelle ($\varepsilon_1$, $\varepsilon_2$, $\varepsilon_{31}$, $\varepsilon_{32}$, $\varepsilon_4$, $\varepsilon_5$, $\varepsilon_6$) als ein Gauß-Prozess-Modell ausgebildet ist, so dass die Rußmasse zum Beladen als auch die Rußmasse für die Regeneration des Partikelfilters (1) anhand der um die Fehlermodelle ($\varepsilon_1$, $\varepsilon_2$, $\varepsilon_{31}$, $\varepsilon_{32,}$ $\varepsilon_4$, $\varepsilon_5$, $\varepsilon_6$) ergänzten Teilmodelle (f1, f2, f31, f32, f4, f5, f6) des physikalischen Modells ermittelt werden,
   wobei die Rußmasse zum Beladen als auch die Rußmasse für die Regeneration des Partikelfilters (1) anhand der um die Fehlermodelle ($\varepsilon_1$, $\varepsilon_2$, $\varepsilon_{31}$, $\varepsilon_{32}$, $\varepsilon_4$, $\varepsilon_5$, $\varepsilon_6$) ergänzten Teilmodelle (f1, f2, f31, f32, f4, f5, f6) des physikalischen Modells ermittelt werden.

2. Verfahren nach einem der vorhergehenden Ansprüche, **dadurch gekennzeichnet, dass** die Fehlermodelle ($\varepsilon_1$, $\varepsilon_2$, $\varepsilon_{31}$, $\varepsilon_{32}$, $\varepsilon_4$, $\varepsilon_5$, $\varepsilon_6$) anhand von zusätzlichen Messungen offline trainiert wird.

3. Verfahren nach einem der vorhergehenden Ansprüche, **dadurch gekennzeichnet, dass** in dem zumindest einen physikalische Modell als auch im dazugehörigen Fehlermodell ($\varepsilon_1$, $\varepsilon_2$, $\varepsilon_{31}$, $\varepsilon_{32}$, $\varepsilon_4$, $\varepsilon_5$, $\varepsilon_6$) sowohl die Rußmasse zum Beladen und/oder die Rußmasse für die Regeneration jeweils für eine Filterwand bestimmt werden.

4. Verfahren nach einem der vorhergehenden Ansprüche, **dadurch gekennzeichnet, dass** in dem physikalischen Modell als auch im dazugehörigen Fehlermodell ($\varepsilon_1$, $\varepsilon_2$, $\varepsilon_{31}$, $\varepsilon_{32}$, $\varepsilon_4$, $\varepsilon_5$, $\varepsilon_6$) sowohl die Rußmasse zum Beladen und/oder die Rußmasse für die Regeneration jeweils für eine Rußpartikelschicht bestimmt werden.

5. Verfahren nach einem der vorhergehenden Ansprüche, **dadurch gekennzeichnet, dass** als zumindest eine Eingangsgröße in dem physikalischen Modell als auch in dem dazugehörigen Fehlermodell ($\varepsilon_1$, $\varepsilon_2$, $\varepsilon_{31}$, $\varepsilon_{32}$, $\varepsilon_4$, $\varepsilon_5$, $\varepsilon_6$) eine Rußpartikelmasse oder eine Partikelanzahl vorgesehen ist.

6. Computerprogrammprodukt mit Programmcodemitteln zur Durchführung des Verfahrens nach einem der vorhergehenden Ansprüche.

7. Maschinenlesbares Speichermedium, auf welchem ein Computerprogramm nach Anspruch 6 gespeichert ist.

8. Steuereinrichtung (2) zur Steuerung eines Verbrennungsmotors (5) mit einem Partikelfilter (1), wobei die Steuereinrichtung (2) dafür ausgebildet ist, eine Rußmasse zum Beladen eines Partikelfilters (1) mit Rußpartikeln aus einem Abgasmassenstrom eines Verbrennungsmotors und/oder eine Rußmasse für die Regeneration, anhand eines Verfahrens nach einem der vorhergehenden Ansprüche 1 bis 5 zu bestimmen.

9. Steuereinrichtung (2) nach Anspruch 8, **dadurch gekennzeichnet, dass**, die Steuereinrichtung (2) dafür ausgebildet ist, eine Regeneration des Partikelfilters (1) anhand der bestimmten Rußmasse vorzunehmen.

## Claims

1. Method for determining a soot mass for loading a particle filter (1) with soot particles from an exhaust gas mass flow from a combustion engine and/or a soot mass for a regeneration of the particle filter (1), with the aid of at least one physical model that describes the physical interactions during operation of the combustion engine (5) based on measured relevant parameters and/or relevant characteristic data,

   wherein, in the at least one physical model, non-measurable variables, such as loading and filtering efficiency, are determined based on measurable or other calculated variables, such as exhaust gas mass flow, pressure and temperature upstream of the particle filter (1), a temperature in the particle filter (1), an oxygen concentration in the exhaust gas mass flow and a raw emissions mass flow, wherein the at least one physical model comprises various sub-models (f1, f2, f31, f32, f4, f5, f6) containing measured relevant parameters and/or relevant characteristic data for the respective sub-model (f1, f2, f31, f32, f4, f5, f6), **characterized in that** each of the sub-models (f1, f2, f31, f32, f4, f5, f6) is supplemented with a data-based error model ($\varepsilon_1$, $\varepsilon_2$, $\varepsilon_{31}$, $\varepsilon_{32}$, $\varepsilon_4$, $\varepsilon_5$, $\varepsilon_6$), wherein the data-based error models ($\varepsilon_1$, $\varepsilon_2$, $\varepsilon_{31}$, $\varepsilon_{32}$, $\varepsilon_4$, $\varepsilon_5$, $\varepsilon_6$) are based at least in part on the relevant parameters and/or relevant characteristic data for the respective sub-model (f1, f2, f31, f32, f4, f5, f6), wherein each of the error models ($\varepsilon_1$, $\varepsilon_2$, $\varepsilon_{31}$, $\varepsilon_{32}$, $\varepsilon_4$, $\varepsilon_5$, $\varepsilon_6$) is in the form of a Gaussian process model, such that the soot mass for loading and the soot mass for the regeneration of the particle filter (1) are ascertained based on the sub-models (f1, f2, f31, f32, f4, f5, f6) of the physical model that are supplemented with the error models ($\varepsilon_1$, $\varepsilon_2$, $\varepsilon_{31}$, $\varepsilon_{32}$, $\varepsilon_4$, $\varepsilon_5$, $\varepsilon_6$),
   wherein the soot mass for loading and the soot mass for the regeneration of the particle filter (1) are ascertained based on the sub-models (f1, f2, f31, f32, f4, f5, f6) of the physical model that are supplemented with the error models ($\varepsilon_1$, $\varepsilon_2$, $\varepsilon_{31}$, $\varepsilon_{32}$, $\varepsilon_4$, $\varepsilon_5$, $\varepsilon_6$) .

2. Method according to one of the preceding claims, **characterized in that** the error models ($\varepsilon_1$, $\varepsilon_2$, $\varepsilon_{31}$, $\varepsilon_{32}$, $\varepsilon_4$, $\varepsilon_5$, $\varepsilon_6$) are trained offline based on additional measurements.

3. Method according to either of the preceding claims, **characterized in that** both the soot mass for loading and/or the soot mass for the regeneration are determined in each case for a filter wall in the at least one physical model and in the associated error model ($\varepsilon_1$, $\varepsilon_2$, $\varepsilon_{31}$, $\varepsilon_{32}$, $\varepsilon_4$, $\varepsilon_5$, $\varepsilon_6$) .

4. Method according to one of the preceding claims, **characterized in that** both the soot mass for loading and/or the soot mass for the regeneration are determined in each case for a soot particle layer in the physical model and in the associated error model ($\varepsilon_1$, $\varepsilon_2$, $\varepsilon_{31}$, $\varepsilon_{32}$, $\varepsilon_4$, $\varepsilon_5$, $\varepsilon_6$) .

5. Method according to one of the preceding claims, **characterized in that** a soot particle mass or a particle number is provided as at least one input variable in the physical model and in the associated error model ($\varepsilon_1$, $\varepsilon_2$, $\varepsilon_{31}$, $\varepsilon_{32}$,

$\varepsilon_4$, $\varepsilon_5$, $\varepsilon_6$) .

6. Computer program product comprising program code means for performing the method according to one of the preceding claims.

7. Machine-readable storage medium on which a computer program according to Claim 6 is stored.

8. Control device (2) for controlling a combustion engine (5) comprising a particle filter (1), wherein the control device (2) is designed to determine a soot mass for loading a particle filter (1) with soot particles from an exhaust gas mass flow from a combustion engine and/or a soot mass for regeneration based on a method according to one of preceding Claims 1 to 5.

9. Control device (2) according to Claim 8, **characterized in that** the control device (2) is designed to carry out a regeneration of the particle filter (1) based on the determined soot mass.


**Revendications**

1. Procédé permettant de déterminer une masse de suie pour charger un filtre à particules (1) avec des particules de suie provenant d'un débit massique des gaz d'échappement d'un moteur thermique et/ou une masse de suie pour régénérer le filtre à particules (1), à l'aide d'au moins un modèle physique qui décrit en partant de paramètres pertinents et/ou de données caractéristiques pertinentes, mesurés, les relations fonctionnelles physiques pendant le fonctionnement du moteur thermique (5) ,

dans lequel dans ledit au moins un modèle physique, des grandeurs non mesurables, comme la charge et l'efficacité de filtration, sont déterminées en partant de grandeurs mesurables ou d'autres grandeurs calculées, comme le débit massique des gaz d'échappement, la pression ou la température en amont du filtre à particules (1), une température dans le filtre à particules (1), une concentration en oxygène dans le débit massique des gaz d'échappement et un débit massique en émissions brutes, dans lequel ledit au moins un modèle physique comprend différents modèles partiels (f1, f2, f31, f32, f4, f5, f6) avec des paramètres pertinents et/ou des données caractéristiques pertinentes, mesurés, pour le modèle partiel respectif (f1, f2, f31, f32, f4, f5, f6), **caractérisé en ce que** chacun des modèles partiels (f1, f2, f31, f32, f4, f5, f6) est complété d'un modèle d'erreur à base de données ($\varepsilon_1, \varepsilon_2, \varepsilon_{31}, \varepsilon_{32}, \varepsilon_4, \varepsilon_5, \varepsilon_6$), dans lequel les modèles d'erreur à base de données ($\varepsilon_1, \varepsilon_2, \varepsilon_{31}, \varepsilon_{32}, \varepsilon_4, \varepsilon_5, \varepsilon_6$) sont basés au moins partiellement sur les paramètres pertinents et/ou les données caractéristiques pertinentes pour le modèle partiel respectif (f1, f2, f31, f32, f4, f5, f6), dans lequel chacun des modèles d'erreur ($\varepsilon_1, \varepsilon_2, \varepsilon_{31}, \varepsilon_{32}, \varepsilon_4, \varepsilon_5, \varepsilon_6$) est réalisé comme un modèle de processus gaussien de sorte que la masse de suie pour la charge ainsi que la masse de suie pour la régénération du filtre à particules (1) sont établies à l'aide des modèles partiels (f1, f2, f31, f32, f4, f5, f6) du modèle physique, complétés des modèles d'erreur ($\varepsilon_1, \varepsilon_2, \varepsilon_{31}, \varepsilon_{32}, \varepsilon_4, \varepsilon_5, \varepsilon_6$),
dans lequel la masse de suie pour la charge ainsi que la masse de suie pour la régénération du filtre à particules (1) sont établies à l'aide des modèles partiels (f1, f2, f31, f32, f4, f5, f6) du modèle physique, complétés des modèles d'erreur ($\varepsilon_1, \varepsilon_2, \varepsilon_{31}, \varepsilon_{32}, \varepsilon_4, \varepsilon_5, \varepsilon_6$).

2. Procédé selon l'une quelconque des revendications précédentes, **caractérisé en ce que** les modèles d'erreur ($\varepsilon_1, \varepsilon_2, \varepsilon_{31}, \varepsilon_{32}, \varepsilon_4, \varepsilon_5, \varepsilon_6$) sont entraînés hors ligne à l'aide de mesures supplémentaires.

3. Procédé selon l'une quelconque des revendications précédentes, **caractérisé en ce que** dans ledit au moins un modèle physique ainsi que dans le modèle d'erreur associé ($\varepsilon_1, \varepsilon_2, \varepsilon_{31}, \varepsilon_{32}, \varepsilon_4, \varepsilon_5, \varepsilon_6$) à la fois la masse de suie pour la charge et/ou la masse de suie pour la régénération sont déterminées respectivement pour une paroi de filtre.

4. Procédé selon l'une quelconque des revendications précédentes, **caractérisé en ce que** dans le modèle physique ainsi que dans le modèle d'erreur associé ($\varepsilon_1, \varepsilon_2, \varepsilon_{31}, \varepsilon_{32}, \varepsilon_4, \varepsilon_5, \varepsilon_6$) à la fois la masse de suie pour la charge et/ou la masse de suie pour la régénération sont déterminées respectivement pour une paroi de filtre.

5. Procédé selon l'une quelconque des revendications précédentes, **caractérisé en ce qu'**une masse de particules de suie ou un nombre de particules est prévu (e) comme ladite au moins une grandeur d'entrée dans le modèle physique ainsi que dans le modèle d'erreur associé ($\varepsilon_1, \varepsilon_2, \varepsilon_{31}, \varepsilon_{32}, \varepsilon_4, \varepsilon_5, \varepsilon_6$).

**6.** Produit de programme informatique, comprenant des moyens de code programme pour exécuter le procédé selon l'une quelconque des revendications précédentes.

**7.** Support de stockage lisible par machine, sur lequel est stocké un programme informatique selon la revendication 6.

**8.** Dispositif de commande (2) permettant de commander un moteur thermique (5) muni d'un filtre à particules (1), dans lequel le dispositif de commande (2) est réalisé pour déterminer une masse de suie pour charger un filtre à particules (1) avec des particules de suie provenant d'un débit massique des gaz d'échappement d'un moteur thermique et/ou une masse de suie pour la régénération, à l'aide d'un procédé selon l'une quelconque des revendications précédentes 1 à 5.

**9.** Dispositif de commande (2) selon la revendication 8, **caractérisé en ce que** le dispositif de commande (2) est réalisé pour procéder à une régénération du filtre à particules (1) à l'aide de la masse de suie déterminée.

**FIG. 1**

FIG. 2

FIG. 3

FIG. 4

EP 4 001 601 B1

**FIG. 5**

**EP 4 001 601 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2065582 A1
- EP 2163740 A1
- US 2013298529 A1
- EP 3450714 A1
- EP 1913245 A1